# EUROPEAN PATENT APPLICATION

(11) **EP 4 852 587 A1**
(43) Date of publication of application: **09.12.2026**
(21) Application number: 25749228.0
(22) Date of filing: 31.01.2025
(51) Int. Cl.: H04W 72/231, H04W 72/232, H04W 48/10, H04W 48/14, H04W 74/00, H04W 72/0446

(54) **METHOD AND APPARATUS FOR PERFORMING REQUEST OPERATION FOR SYSTEM INFORMATION IN WIRELESS COMMUNICATION**

(30) Priority: 01.02.2024 KR 20240016158; 24.01.2025 KR 20250011328
(71) Applicant: KT Corporation, Seongnam-si, Gyeonggi-do 13606 (KR)
(72) Inventor: PARK, Ki Hyeon, Seongnam-si, Gyeonggi-do 13606 (KR)
(74) Representative: Santarelli
(86) International application number: PCT/KR2025/099150
(87) International publication number: WO 2025/165189

(57) **Abstract**

Provided is a method of performing a request operation for system information by a UE in wireless communication. The method may include confirming that a system information block is not transmitted after transmission of a synchronization signal block from a base station; transmitting a request signal for the system information block based on configuration information comprising uplink resource information for transmission of the request signal for the system information block; and receiving the system information block according to the request signal for the system information block.

## Description

### [Technical Field]

The present disclosure relates to a method and apparatus for performing a request operation for system information in a wireless access network ("5G", "NR [New Radio]") or a next-generation wireless access network (meaning "5G-Advanced", "6G", or a subsequent 3GPP wireless access network).

### [Background Art]

3GPP continues research and development on wireless communication technology. In a wireless communication system, energy efficiency is also a very important consideration in addition to latency, reliability, and availability.

A base station must transmit predetermined system information together with a synchronization signal to enable access by a UE. The transmission of the predetermined system information is performed regardless of the number of UEs capable of accessing a network, resulting in unnecessary transmission even when there are almost no UEs capable of accessing.

Therefore, a detailed design for a method of enabling more efficient transmission and reception of system information is needed.

### [Disclosure]

### [Technical Problem]

The present disclosure may provide a method and apparatus for performing a request operation for system information in wireless communication.

### [Technical Solution]

In one aspect, the present disclosure may provide a method of performing a request operation for system information by a UE in wireless communication. The method may include: confirming that a system information block is not transmitted after transmission of a synchronization signal block from a base station; transmitting a request signal for the system information block based on configuration information comprising uplink resource information for transmission of the request signal for the system information block; and receiving the system information block according to the request signal for the system information block.

In another aspect, the present disclosure may provide a method of performing a request operation for system information by a base station in wireless communication. The method may include: informing a UE that a system information block is not transmitted after transmission of a synchronization signal block from the base station; receiving a request signal for the system information block based on configuration information comprising uplink resource information for reception of the request signal for the system information block; and transmitting the system information block according to the request signal for the system information block.

In another aspect, the present disclosure may provide a UE performing a request operation for system information in wireless communication. The UE may incliude: a transmitter; a receiver; and a controller configured to control operations of the transmitter and the receiver, wherein the controller is configured to: confirm that a system information block is not transmitted after transmission of a synchronization signal block from a base station, transmit a request signal for the system information block based on configuration information comprising uplink resource information for transmission of the request signal for the system information block, and receive the system information block according to the request signal for the system information block.

In another aspect, the present disclosure may provide a base station performing a request operation for system information in wireless communication. The base station may include: a transmitter; a receiver; and a controller configured to control operations of the transmitter and the receiver, wherein the controller is configured to: inform a UE that a system information block is not transmitted after transmission of a synchronization signal block from the base station, receive a request signal for the system information block based on configuration information comprising uplink resource information for reception of the request signal for the system information block, and transmit the system information block according to the request signal for the system information block.

### [Advantageous Effects]

According to the present embodiments, it is possible to provide a method and an apparatus for performing a request operation for system information in wireless communication capable of efficiently transmitting system information.

In addition, the base station does not transmit system information until the base station receives a request for the system information, thereby reducing operational power consumption in an environment with few users.

### [Description of Drawings]

FIG. 1 is a diagram illustrating a structure of an NR wireless communication system.
FIG. 2 is a diagram for explaining a frame structure in an NR system.
FIG. 3 is a diagram for explaining a resource grid supported by a radio access technology.
FIG. 4 is a diagram for explaining a bandwidth part supported by a radio access technology.
FIG. 5 is a diagram illustrating a synchronization signal block in a radio access technology.
FIG. 6 is a diagram for explaining a random access procedure in a radio access technology.
FIG. 7 is a diagram for explaining a CORESET.
FIG. 8 is a flowchart illustrating a procedure of performing a request operation for system information by a UE in wireless communication according to an embodiment.
FIG. 9 is a flowchart illustrating a procedure of performing a request operation for system information by a base station in wireless communication according to an embodiment.
FIG. 10 is a block diagram showing a configuration of a UE according to an embodiment.
FIG. 11 is a block diagram showing a configuration of a base station according to an embodiment.

### [Mode for Invention]

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, W-iFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

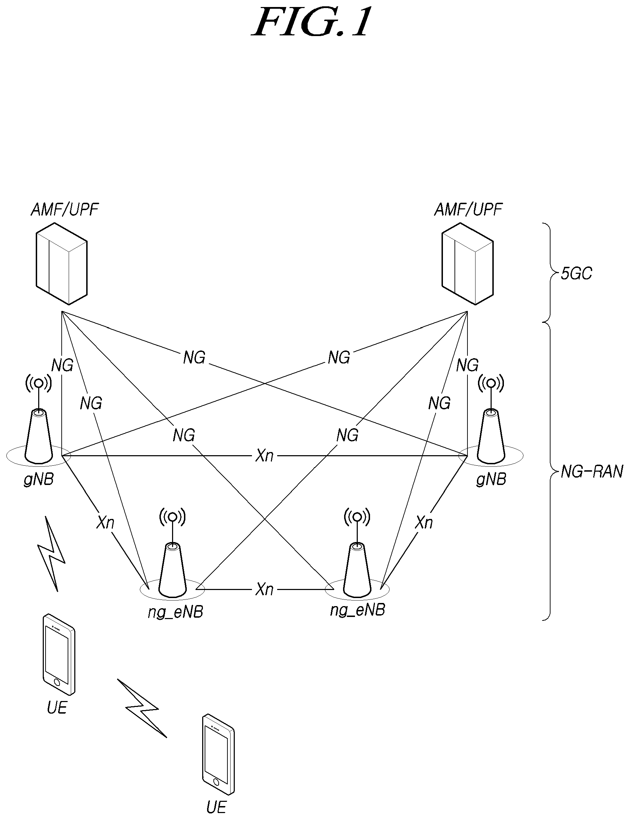

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

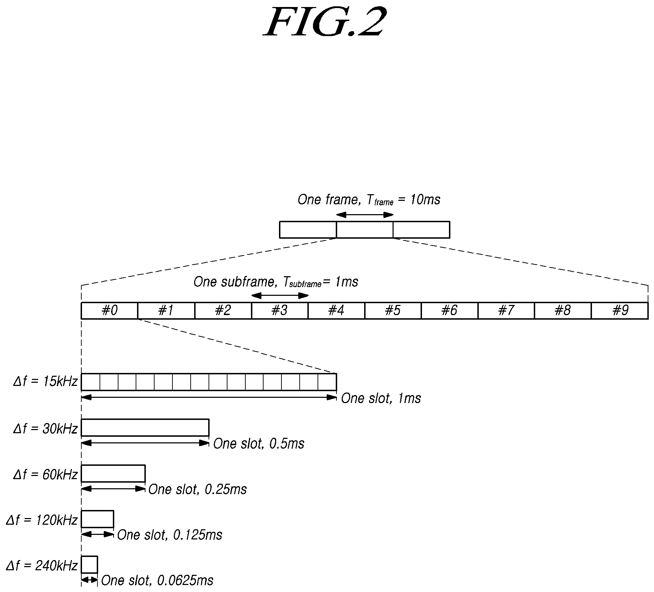

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

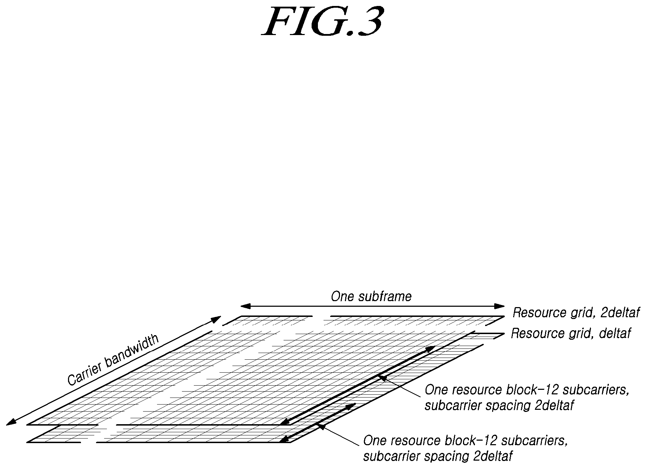

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

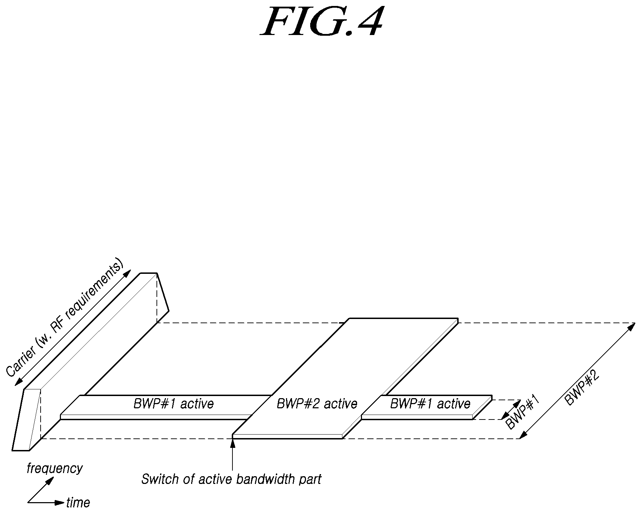

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

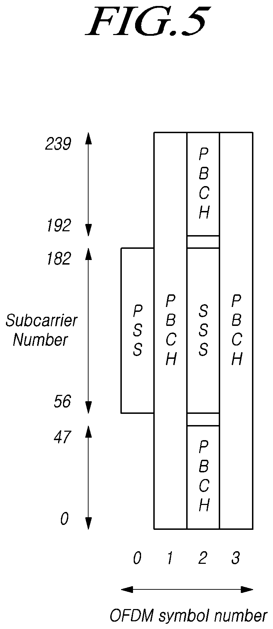

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

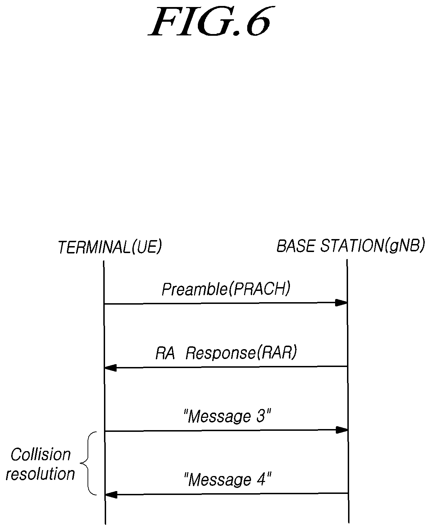

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

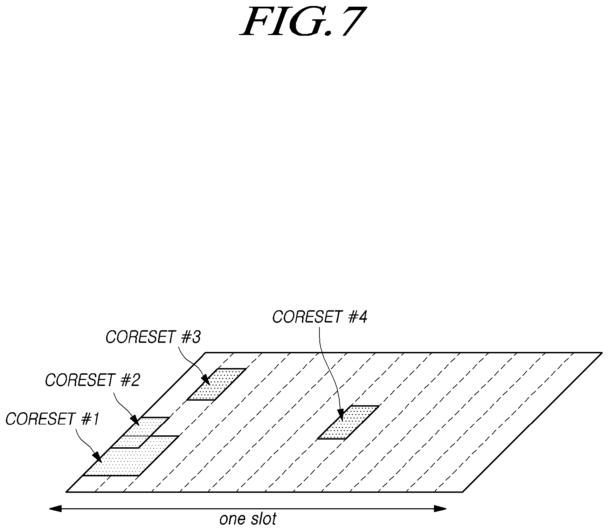

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth ranging from 1.4 MHz to 20 MHz when configuring a single LTE CC, and a typical LTE UE supports a transmission/reception capability of a bandwidth of 20 MHz for a single LTE CC.

However, NR is designed to support NR UE having different transmission/reception bandwidth capabilities over a single wideband NR CC. Accordingly, one or more bandwidth parts (BWPs) including subdivided bandwidths may be configured for an NR CC, thereby supporting flexible and wider bandwidth operation through configuration and activation of different bandwidth parts for respective UEs.

Specifically, one or more bandwidth parts may be configured for a UE in a single serving cell in NR, and the UE may activate one downlink (DL) bandwidth part and one uplink (UL) bandwidth part and use the activated downlink and uplink bandwidth parts for uplink/downlink data transmission/reception in the corresponding serving cell. In addition, when a plurality of serving cells is configured for the UE (i.e., carrier aggregation (CA) is applied to the UE), the UE may also activate one downlink bandwidth part and/or one uplink bandwidth part in each serving cell and use the activated downlink bandwidth part and/or uplink bandwidth part for uplink/downlink data transmission/reception using radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

Simultaneously activation and use of a plurality of downlink and/or uplink bandwidth parts may be defined according to the capability of the UE and the configuration of the bandwidth parts in a serving cell. However, NR Release 15 (rel-15) defined activation and use of only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages related to NR (New Radio) may be interpreted according to meanings used at present or in the past or meanings to be used in the future.

The present disclosure provides a method for a UE to request transmission of system information from a wireless base station in a 3GPP NR system. In particular, the present disclosure provides a method for a UE to request transmission of system information in an environment in which a base station basically does not transmit system information after a synchronization signal block in an environment in which an energy saving function is performed. This will be described in detail below.

In the typical 3GPP NR, ten or more types of system information are transmitted using blocks such as SIB1 (System Information Block 1), SIB2, and the like. Among the types of system information, information following SIB2 may be transmitted according to a request of a UE, but in the case of SIB1, which includes information essential for connection configuration such as frequency bands supported by a UE for transmission and reception, an SCS, and a random access resource space, transmission is always transmitted in a resource space specified by a standard following transmission of a synchronization signal. Therefore, a UE failing to receive SIB1 for various reasons may be unable to perform a subsequent network access procedure. However, transmission of SIB1 following every synchronization signal continuous as long as the synchronization signal is transmitted even when no UE is capable of accessing a network, thereby increasing power consumption. analysis indicates potential power saving when when a base station having little actual traffic does not send SIB1, the power saving may reach 50% or more in some scenarios.

Accordingly, there is a need for a specific method for a UE that is not currently in a connected state to request SIB1 from a cell not transmitting SIB1.

A typical NR SSB (Synchronization Signal Block) includes an MIB (Master Information Block) and some additional information in a payload, and is largely composed of a frequency position, selection of a PSS/SSS (primary synchronization signal/secondary synchronization signal), a position and value of a DMRS (DeModulation Reference Signal) in a PBCH (Physical Broadcast Channel), and content in the PBCH. Among the foregoing SSB elements, the PSS and SSS mainly provide cell ID-related information, and the MIB provides position information of CORESET zero for delivering scheduling information of a PDSCH through which SIB1 is transmitted for SIB1 transmission, in addition to a frame number, subcarrier spacing information, band position information, and barring information among basic information for cell access by a UE. The additional information mainly includes some of the remaining bits of the frame number or remaining band position information not accommodated in the MIB.

In particular, a parameter referred to as k_SSB indicates a frequency offset between the starting frequency of a current synchronization signal and Point A, a reference point of the band, and represents as the frequency offset using 5-bit value in FR1 (frequency range 1) and a 4-bit value in FR2. At this time, when the value of k_SSB is 24 or more in the case of FR1 and 12 or more in the case of FR2, the UE determines that SIB1 is not transmitted, and at this time, when k_SSB is a specific value, that is, between 24 and 29 in the case of FR1 and between 12 and 13 in the case of FR2 (frequency range 2), alternative SSB frequency position information capable of receiving SIB1 may be informed through existing CORESET zero position-related information.

The existing NR system is configured such that a synchronization signal includes either SIB1 configuration information or information indicating a location of an alternative synchronization signal associated with SIB1. If the alternative synchronization signal does not include valid SIB1 configuration information, the UE does not access the corresponding cell. Therefore, unless SIB1 is continuously transmitted in at least one band regardless of whether a user is present, the UE cannot establish a connection to the base station.

The present disclosure provides a method of requesting, by a UE, transmission of system information of a wireless base station in a 3GPP NR system, and a method of transmitting, by the base station, SIB1 by the request. In particular, a format of a request message and a method of configuring SIB1 transmission according to the format are provided.

Hereinafter, a method of performing a request operation for system information by a UE in wireless communication will be described in detail with reference to the related drawings.

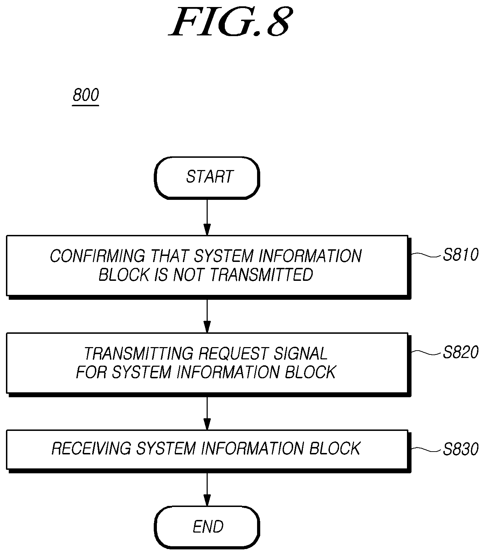

FIG. 8 is a diagram illustrating a procedure 800 of performing a request operation for system information by a UE in wireless communication according to an embodiment.

Referring to FIG. 8, the UE may confirm that a system information block is not transmitted after transmission of a synchronization signal block from the base station (S810).

Generally, a UE receives a synchronization signal block (SSB) from a base station in order to access the base station. The synchronization signal block includes a Master Information Block (MIB) and predetermined additional information. The MIB provides location information of CORESET 0 for delivering scheduling information of a PDSCH on which SIB1 (System Information Block 1), among system information blocks, is transmitted. The UE may receive the SIB1 and establish a connection to the base station using information in the SIB1.

However, when a cell to which the UE intends to connect is configured to transmit an On-Demand SIB1, that is, SIB1 in response to a request from the UE, the UE does not receive the SIB1 until the UE makes a separate request.

In this case, the UE may receive information indicating that the cell is configured to transmit a system information block on demand (On-Demand SIB1), and confirm that the system information block is not transmitted. In this case, the information indicating that the cell is configured to transmit SIB1 on demand may include at least one of the following: information for preventing a legacy UE that does not support an On-Demand SIB1 function from accessing the base station, or information for informing a UE supporting the On-Demand SIB1 function whether the corresponding base station supports the On-Demand SIB1 function.

According to an example, the information indicating that the cell is configured to transmit a system information block on demand may indicate that a frequency offset for a synchronization signal block is greater than or equal to a first reference value in frequency range 1 (FR1) and greater than or equal to a second reference value in frequency range 2 (FR2). In this case, the first reference value may be greater than the second reference value. Specifically, a value of k_SSB, which is a parameter indicating the frequency offset, may be set to an invalid value, that is, a value of 24 or more in the case of FR1 and 12 or more in the case of FR2. For example, when the base station transmits the value of k_SSB as 30 in FR1, the UE may confirm that the k_SSB value is invalid and determine that the base station requires an SIB1 request.

Referring back to FIG. 8, the UE may transmit a request signal for the system information block based on configuration information comprising uplink resource information for transmitting the request signal for the system information block (S820).

The UE may configure the request signal for the system information block based on the configuration information including the uplink resource information for transmitting the request signal for the system information block.

According to an example, the configuration information may include at least one item of uplink resource information, such as uplink transmission band information in which an SIB request may be transmitted, frequency location information within the uplink transmission spatial band in which the SIB request may be transmitted, time location information within the uplink transmission spatial band in which the SIB request may be transmitted, or uplink transmission spatial band subcarrier spacing information in which the SIB request may be transmitted.

In addition, the configuration information may further include at least one of information such as a PRACH format, a sequence, a PUCCH, or an MCS, as signal format information to be used for the SIB request, a requestable SIB type, PDSCH resource allocation information on which the SIB is to be transmitted in response to the request, new CORESET information through which scheduling information for the SIB is to be transmitted in response to the request or whether to reuse a current CORESET, resource allocation information through which an ACK/NACK or other feedback is to be transmitted when the UE transmits the SIB request, or information such as an RNTI to be used when the UE transmits the request.

According to an example, a format of the request signal for the system information block may be configured based on a random access preamble. The UE may configure the format of the request signal for the system information block as a random access preamble (RA Preamble) or a part thereof. That is, at least some PRACH resources may be used for the SIB1 request. In this case, according to an example, at least one of information on which of a plurality of preset sequences is selected, a cyclic shift value, and a transmission resource space, or which of a plurality of preset RACH occasion spaces defined by a combination thereof is selected, may be included.

The UE may configure the request signal for the system information based on the received configuration information and transmit the request signal using the uplink resource information included in the configuration information.

Referring back to FIG. 8, the UE may receive the system information block in response to the request signal for the system information block (S830).

The UE may receive a response signal in response to the transmission of the request signal for the system information block from the base station. The UE may receive a preset ACK from the base station to provide fast feedback on whether the base station will transmit SIB1. According to an example, the response signal may comprise predetermined downlink control information received in CORESET 0 (Control Resource Set 0). That is, transmission of the response signal corresponding to the request signal for the system information block may be performed in a form of sending a DCI of a preset format in CORESET 0. Alternatively, according to another example, the response signal may be transmitted through a downlink data channel together with a downlink control channel.

According to an example, the configuration information may include time interval information indicating when the system information block configured in a slot unit is received. The UE may receive SIB1 from the base station based on the time interval information. That is, the UE may receive SIB1 at a time, after a time, or within a time defined in the configuration information received from the base station, and the time may be defined in a slot unit.

According to the embodiments, there may be provide a method and apparatus for configuring a request operation for system information in wireless communication that efficiently transmits system information. In addition, the base station does not transmit system information until there is a request, thereby reducing operational power consumption in an environment with few users.

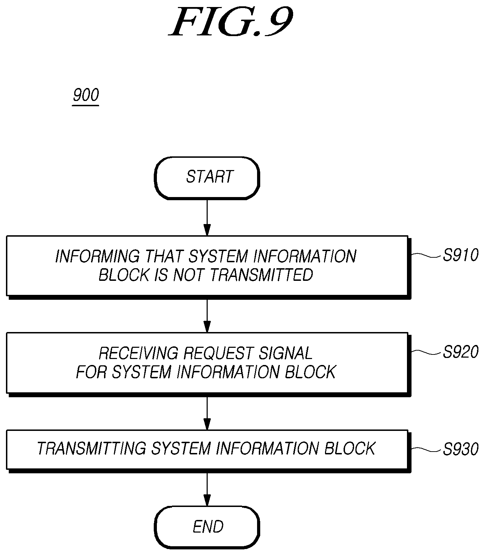

FIG. 9 is a diagram illustrating a procedure 900 for performing a request operation for system information by a base station in wireless communication according to an embodiment. The description provided above with reference to FIG. 8 may be omitted to avoid redundant description, and the omitted description may be applied substantially identically to the base station as long as it does not contradict the technical scope of the present disclosure.

Referring to FIG. 9, the base station may inform the UE that the system information block is not transmitted after transmission of the synchronization signal block from the base station (S910).

When the base station is configured to transmit On-Demand SIB1, that is, SIB1 in response to a request from the UE, the base station does not transmit SIB1 unless the UE makes a separate request.

In this case, the base station may inform the UE that the system information block is not transmitted by transmitting information indicating that the cell is configured to transmit the system information block on demand (On-Demand SIB1). In this case, the information indicating that the cell is configured to transmit SIB1 on demand may include at least one of the following: information for preventing a legacy UE that does not support an On-Demand SIB1 function from accessing the base station, or information for informing a UE supporting the On-Demand SIB1 function whether the corresponding base station supports the On-Demand SIB1 function.

According to an example, the information indicating that the cell is configured to transmit the system information block on demand may indicate that a frequency offset for a synchronization signal block is greater than or equal to a first reference value in frequency range 1 (FR1) and greater than or equal to a second reference value in frequency range 2 (FR2). In this case, the first reference value may be greater than the second reference value. Specifically, a value of k_SSB, which is a parameter indicating the frequency offset, may be set to an invalid value, that is, a value of 24 or more in the case of FR1 and 12 or more in the case of FR2. For example, when the base station transmits the value of k_SSB as 30 in FR1, the UE may confirm that the k_SSB value is invalid and determine that the base station requires an SIB1 request.

Referring back to FIG. 9, the base station may receive a request signal for the system information block based on configuration information comprising uplink resource information for receiving the request signal for the system information block (S920).

The base station may transmit configuration information including uplink resource information for transmitting the request signal for the system information block to the UE. The UE may configure the request signal for the system information block based on the received configuration information.

According to an example, the configuration information may include at least one item of uplink resource information, such as uplink transmission band information in which an SIB request may be transmitted, frequency location information within an uplink transmission space band in which an SIB request may be transmitted, time location information within an uplink transmission space band in which an SIB request may be transmitted, or uplink transmission space band subcarrier spacing information in which an SIB request may be transmitted.

In addition, the configuration information may further include at least one of information such as a PRACH format, a sequence, a PUCCH, or an MCS, as signal format information to be used for the SIB request, a requestable SIB type, PDSCH resource allocation information on which the SIB is to be transmitted in response to the request, new CORESET information through which scheduling information for the SIB is to be transmitted in response to the request or whether to reuse a current CORESET, resource allocation information in which ACK/NACK or other feedback is to be transmitted when the UE transmits the SIB request, or information such as an RNTI to be used when the UE transmits the request.

According to an example, a format of the request signal for the system information block may be configured based on a random access preamble. The UE may configure the format of the request signal for the system information to be a random access preamble (RA Preamble) or a part thereof. That is, at least some PRACH resources may be used for the SIB1 request. In this case, according to an example, at least one of information on which of a plurality of preset sequences is selected, a cyclic shift value, and a transmission resource space, or which of a plurality of preset RACH occasion spaces defined by a combination thereof is selected may be included.

The base station may receive the request signal for the system information from the UE using the uplink resource information included in the configuration information.

Referring back to FIG. 9, the base station may transmit the system information block in response to the request signal for the system information block (S930).

The base station may transmit a response signal in response to transmission of the request signal for the system information block to the UE. The base station may transmit a preset ACK to the UE to support fast feedback on whether the corresponding base station will transmit SIB1. According to an example, the response signal may comprise predetermined downlink control information received in CORESET 0 (Control Resource Set 0). That is, transmission of the response signal corresponding to the request signal for the system information block may be performed in a form of transmitting a preset format of DCI in CORESET 0. Alternatively, according to another example, the response signal may be transmitted through a downlink data channel together with a downlink control channel.

According to an example, the configuration information may include time interval information indicating when the system information block configured in a slot unit is received. The base station may transmit SIB1 to the UE based on the time interval information. That is, the base station may transmit SIB1 at, after, or within a time defined in the configuration information, and the time may be defined in a slot unit.

According to the embodiments, there may be provided a method and apparatus for configuring a request operation for system information in wireless communication that efficiently transmits system information. In addition, the base station does not transmit system information until there is a request, thereby reducing operational power consumption in an environment with few users.

Hereinafter, each embodiment related to a method of performing a request operation for system information in wireless communication will be described in detail with reference to the related drawings.

Accordingly, the present disclosure provides a method of configuring an SIB1 request signal, and a method of transmitting SIB1 by a base station according to an SIB1 request.

### Embodiment 1. Method of configuring SIB1 request signal

The method provides a signal format and content transmitted through a corresponding resource by a UE that has received uplink resource information for transmitting an SIB request.

### ① Format of SIB1 request signal

First, the signal format may be a random access (RA) preamble or a part thereof. Alternatively, the signal format may be in the form of a sounding reference signal (SRS). Alternatively, the signal format may be newly defined as uplink control information (UCI). Alternatively, the signal format may reuse existing UCI such as a scheduling request (SR). Alternatively, the request signal may be transmitted on a PUSCH by selecting an MCS designated by the base station or predefined, for example, MCS index 0. In this case, an SI-RNTI may be used as a radio network temporary identifier (RNTI), or another predefined constant RNTI may be used. Alternatively, an RNTI previously indicated by the base station may be used, or an RNTI calculated based on information delivered by an SSB or information included in SIB1 resource configuration information may be used..

When a payload transmitted by the UE has a size of one or more bits, the payload, in the case of a PRACH, may be expressed by which of a plurality of preset sequences is selected, and which of a plurality of preset RACH occasion spaces defined by a cyclic shift value therefor and a transmission resource space, or a combination thereof, is selected. Similarly, in the case of an SRS, it may be expressed by which of a plurality of preset sequences is selected, and a cyclic shift value therefor and a transmission resource space, or a combination thereof. In the case of a PUCCH, a method of configuring and encoding a payload in existing PUCCH formats 0, 1, 2, 3, etc. may be applied, and in particular, when information related to a payload size is indicated in a request signal scheduling process of the base station, a PUCCH format corresponding to the payload size may be determined.

### ② Method of configuring SIB1 request signal payload

When a payload size of the request signal transmitted by the UE is 0 or a field related to whether to request an SIB is not included in the payload, the base station transmits SIB1 upon detecting the corresponding request signal. When the payload size is one or more bits, the request signal may include one or more of the following items of information.
- Whether SIB1 transmission is requested
- Whether an ACK (Acknowledgement) is requested for an SIB1 transmission request
- Information related to a preferred band
- Preferred time offset (minimum or maximum interval between request signal and SIB1 signal)
- Information related to a request maintenance time or number of times for which the base station maintains SIB1 transmission
- Priority
- A part of information related to UE capability: UE category, available bandwidth, whether HD (Half-Duplex)-FDD, etc.
- CRC (Cyclic Redundancy Check) (using an SI-RNTI or a new constant RNTI or an RNTI indicated to the UE by the base station)

### Embodiment 2. Method for a subsequent operation of base station in response to an SIB1 request

The method relates to a subsequent operation performed when the base station receives the request signal transmitted according to Embodiment 1. The method may be divided into a method of transmitting an ACK for the request, a method of retransmitting an SSB including SIB1 configuration information, and a method of transmitting only SIB1 without an SSB.

### ① Method of transmitting an ACK for a request

The base station may transmit a preconfigured ACK to the UE to support fast feedback on whether the base station will transmit SIB1. This may be performed in a form of transmitting a special SSB of a preconfigured type or transmitting a DCI of a preconfigured type in CORESET zero. Alternatively, scheduling information for the ACK may be previously indicated by the base station. Transmission of the ACK may always be performed upon a request for SIB1 or may be performed upon a request from the UE. In addition to the ACK, a NACK (Negative Acknowledgement) indicating that SIB1 transmission will not be performed may also be transmitted. When a payload of the ACK has a size of one or more bits, the ACK may include one or more of the following.
- An indication of ACK or NACK
- Information related to a CORESET space in which a SIB1 scheduling DCI is to be transmitted
- Information indicating a time at which the SIB1 scheduling DCI is to be transmitted
- Time-related information for transmission of an SSB including SIB1 configuration information
- Information indicating a band of an SSB including SIB1 configuration information
- Uplink resource information for an alternative SIB1 request

According to the ACK message, the UE may not perform cell access, may receive SIB1 information at a location notified by the base station, or may retransmit a SIB1 transmission request message having the same format as, or a modified format relative to, the initial SIB1 transmission request message.

### ② Method of retransmitting an SSB

The base station may perform a legacy operation including SIB1 for a next SSB in response to a request from the UE. The next SSB may be the earliest SSB after receiving the request within the same band. Alternatively, it may be an SSB at the same location (index) of a next period (20 ms). For example, the initial SSB referenced by the UE and the SSB comprising SIB1 configuration information are transmitted with a difference of 20 ms. Alternatively, it may be the first SSB at the same location (index) after the UE request signal or an ACK signal for the request. This may be applied, for example, when a time gap between the initial SSB and an end timing of the UE request signal is 20 ms or more. Alternatively, an SSB after a time defined in the standard or requested by the UE, rather than the initial one, may comprise SIB1 scheduling information. Between the UE request signal and the SSB comprising SIB1 configuration information, a minimum or maximum time gap may be defined by the standard, notified by the base station, or requested by the UE.

An SSB performing the SIB1 legacy operation may be transmitted in a band different from the SSB initially received by the UE. In this case, according to a typical method of indicating another band, that is, when k_SSB is a specific value, that is, between 24 and 29 for FR1, and between 12 and 13 for FR2, an alternative SSB frequency location delivered through controlResourceSetZero and searchSpaceZero may be the SSB band performing the legacy operation. Alternatively, the SSB performing the SIB1 legacy operation may be one of SSB indexes that were not previously used. For example, a base station that transmitted an SSB only in a first index for power saving may transmit an SSB comprising SIB1 indication information in a second index. Such an index offset value may be predefined or notified by the base station. In addition, a QCL (Quasi Co Location) relationship may be maintained between the SSB initially recognized by the UE and the SSB comprising SIB1 information as a request response.

### ③ Method of not retransmitting an SSB

As another method, in accordance with the request, a DCI performing SIB1 scheduling may be transmitted in CORESET zero defined in the typical SSB. The DCI may use the same format as a DCI scheduling typical SIB1 transmission, and may be transmitted at a defined time, after the time, or within the time, and the time may be defined in a physical unit or defined in a slot unit, and the value thereof may be defined by the standard, notified by the base station, or requested by the UE.

The corresponding SIB1 transmission may be performed only once per request, or may be performed for a time predefined in the standard. For example, all SSBs in a next frame after the request is made may comprise SIB1 information. Alternatively, under the same condition, it may be performed periodically as many times as determined in the standard, previously indicated by the base station, or requested by the UE.

Example 1: When the UE transmits priority information by including the priority information in the request, the base station may transmit SIB1 a number of times determined based on the priority and within a time period determined based on the priority after receiving the request of the UE.

In addition, the present disclosure provides a method in which a base station may provide, through synchronization signal information, a resource through which a UE may request transmission of system information from a wireless base station in a 3GPP NR system. In particular, a method of informing a UE that an on-demand SIB request is possible, and a method of informing a UE of a resource through which the UE may request SIB1 transmission without receiving SIB1 is provided.

The present disclosure broadly provides a method of informing that a cell is configured to transmit SIB1 on-demand, and a method of informing a UE of a resource for transmitting a request signal.

### Embodiment 3. Method of informing that a cell is configured to transmit SIB1 on-demand

The method may be divided into a method of preventing a legacy UE that does not support an SIB1 request function from accessing a base station, and a method of informing a UE supporting he SIB1 request function whether the corresponding base station supports the SIB1 request function

### ① Method of preventing access of a legacy UE

A base station that does not transmit SIB1 may indicate barring during a synchronization process, that is, prevent access to a cell, to prevent an existing legacy UE that does not support the corresponding function from malfunction. This may be indicated by setting cellBarred of an MIB to Enabled. Alternatively, a method of using an invalid value as a value of k_SSB indicating a frequency offset, that is, a value of 24 or more for FR1 and 12 or more for FR2, may be used. Alternatively, even if k_SSB is valid, a method of indicating values of controlResourceSetZero and searchSpaceZero, which are parameters related to a location of CORESET zero indicated in a table form, as reserved areas not provided in an existing table may be used. Alternatively, a combination of two or more of the foregoing methods may be used.

### ② Method of informing whether the corresponding base station supports the SIB1 request function

By using a specific combination of information that a base station may convey through an SSB, a UE supporting On-Demand SIB1 may recognize, based on the specific combination, that the base station requires an SIB1 request. For improved efficiency, this may be a combination that an existing UE recognizes as Barring. For example, when k_SSB is delivered as a specific value or one of a set of values, cellBarred is additionally set to Enabled, or k_SSB is a specific value or one of a set of values and values of controlResourceSetZero and searchSpaceZero are a specific value or one of a set of values, the UE may determine that the base station is a base station requiring an SIB1 request. The specific value described herein may be a constant, or may be a value determined based on a cell ID, k_SSB, a system frame number, or other values delivered in the SSB. In determining the corresponding combination, a GSCN (Global Synchronization Channel Number) value, a cell ID, a frame number, an SSB index, an arrangement pattern of the SSB, and the like, which are not involved in Barring of an existing user, may be additionally or independently involved and determined.
- Example 1: In FR1, a base station may transmit k_SSB as 30 to allow a UE to recognize that the base station is a base station requiring an SIB1 request.
- Example 2: In FR1, when an SCS of SS/PBCH is 15 kHz and an SCS of PDCCH is 15 kHz, a base station may transmit a value of controlResourceSetZero as 15 to allow a UE to recognize that the base station is a base station requiring an SIB1 request.
- Example 3: A base station may use a specific value for a GSCN value of an SSB and set cellBarred to Enabled to make a UE recognize that it is a base station requiring a SIB1 request.

### Embodiment 4. Method of informing a UE of a resource for transmitting a request signal

The present method may be divided into a method in which a UE needs to recognize whether a base station transmitting an SSB through Embodiment 3 is a base station requiring an SIB1 request, and a method in which the UE does not need to make such a determination.

### ① Method in which there is a need to recognize whether a base station is a base station requiring an SIB1 request

When a UE knows that a base station is configured to receive an SIB1 request through Embodiment 3 or other means, the UE may transmit an SIB1 request signal using a resource indicated by a k_SSB value, a controlResourceSetZero value, and a searchSpaceZero value. For example, a location of an uplink resource may be specified through controlResourceSetZero, and a signal format may be specified through searchSpaceZero. The location of the corresponding uplink resource may be the same resource as a resource indicated for existing CORESET zero, or may be expressed as a separate table.

As another method, a location determined relatively with respect to an SSB may be specified by a standard. For example, a specific SSB is always transmitted in a slot before an uplink, and a relationship between the SSB and a location of an SIB1 request transmission resource in the slot may be specified. Whether to use the corresponding method may be determined based on a band condition or the like, and when not used, a method in which there is no need to recognize whether a base station is a base station requiring an SIB1 request may be applied instead.
- Example 1: Band or slot information may be delivered through controlResourceSetZero and/or searchSpaceZero. For example, when a band in which an SSB is transmitted is a Time Division Duplex (TDD) band, slot offset information may be included, and when the band is a Frequency Division Duplex (FDD) band, band information may be included, and the slot offset information and the band information may be delivered in a multiplexed form of the two. The slot offset information and the band information may be configured in a table form, or may be expressed in a form of a band number or a band index within a paired band.
- Example 2: In the case of an FDD band, or when a GSCN corresponds to a specific value/a set of a specific range, instead of using the corresponding method, a method that does not require recognizing whether a base station is a base station requiring an SIB1 request may be used.

### ② Method that does not require recognizing whether a base station is a base station requiring an SIB1 request

The method may be applied to both cases of recognizing or not recognizing whether a base station is a base station requiring an SIB1 request through the method provided in Embodiment 3 or other means. For this purpose, the base station may additionally define a new DCI that may be transmitted through a CORESET zero transmission space indicated through a ControlResourceSetZero value and a searchSpaceZero value. This may be newly defined as, for example, DCI format 2-x, and may be scrambled with an SI-RNTI, another predefined constant, or an RNTI derivable from information obtainable from an SSB, such as a cell ID. The DCI may include one or more of the following items of information.
- Uplink transmission space band information in which the UE may transmit an SIB request
- Frequency location information within an uplink transmission band in which the UE may transmit an SIB request
- Time location information within an uplink transmission band in which the UE may transmit an SIB request
- Subcarrier spacing information of an uplink transmission band in which the UE may transmit an SIB request
- A signal format to be used by the UE for an SIB request - a Physical Random Access Channel (PRACH) format, a sequence to be used, a Physical uplink control channel (PUCCH) type, a Modulation Coding Scheme (MCS), etc.
- SIB types requestable by the UE
- PDSCH resource allocation information on which an SIB is to be transmitted upon request of the UE
- New CORESET information through which scheduling information for the SIB is to be transmitted upon request of the UE, or whether to reuse a current CORESET
- Resource allocation information in which an ACK/NACK or other feedback is to be transmitted when the UE transmits an SIB request
- An RNTI to be used when the UE transmits a request

As another method, the base station may acquire one or more of the foregoing items of information regarding the transmission resource based on cell configuration information received from a previous cell. The cell configuration information may include information related to an SSB configuration value of a cell to which an On-Demand SIB1 is applied, and information such as a relative uplink resource location, a format, and the like.

The method does not require the UE to determine whether the base station requires an SIB1 request, but may also be applied when the UE recognizes it.

Each of the embodiments provided in the present disclosure may be applied independently or may be applied in any combination. In addition, a newly introduced term may be given any name that facilitates understanding of the meaning of the term, and even when other terms having substantially the same meaning are used, the technical scope of the present disclosure may be equally applied.

Hereinafter, configurations of a UE and a base station capable of performing some or all of the present embodiments described with reference to FIGS. 1 to 9 will be described with reference to the drawings. The description provided above may be omitted to avoid redundant description, and the omitted description may be applied substantially identically to the following description as long as it does not contradict the technical scope of the present disclosure.

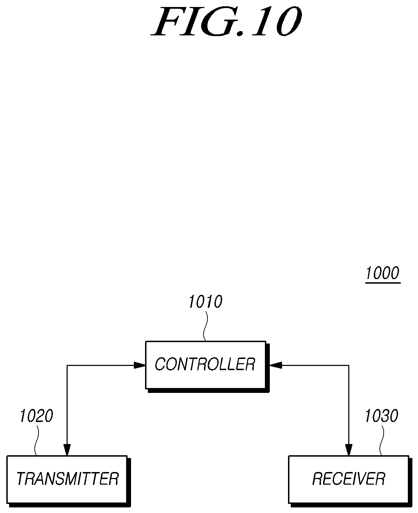

FIG. 10 is a block diagram illustrating a configuration of a UE 1000 according to an embodiment.

Referring to FIG. 10, a UE 1000 according to another embodiment comprises a transmitter 1020, a receiver 1030, and a controller 1010 configured to control operations of the transmitter and the receiver.

The controller 1010 may control overall operations of the UE 1000 according to a method of performing a request operation for system information in wireless communication described above.

The controller 1010 may confirm that a system information block is not transmitted after transmission of a synchronization signal block from a base station. When a cell to which the controller 1010 intends to connect is configured to transmit an On-Demand SIB1, that is, SIB1 in response to a request from a UE, the controller 1010 does not receive the SIB1 unless the controller 1010 makes a separate request.

In this case, the controller 1010 may receive information indicating that the cell is a cell configured to transmit a system information block on demand (On-Demand SIB1) and confirm that the system information block is not transmitted. In this case, the information indicating that the cell is a cell that transmits SIB1 on-demand may include at least one of the following: information for preventing a legacy UE that does not support an On-Demand SIB1 function from accessing the base station, or information for informing a UE supporting the On-Demand SIB1 function of whether the corresponding base station supports the On-Demand SIB1 function.

According to an example, the information indicating that the cell is a cell configured to transmit a system information block on demand may indicate that a frequency offset for a synchronization signal block is greater than or equal to a first reference value in frequency range 1 (FR1) and greater than or equal to a second reference value in frequency range 2 (FR2). In this case, the first reference value may be greater than the second reference value. Specifically, a value of k_SSB, which is a parameter indicating a frequency offset, may be set to an invalid value, that is, a value of 24 or more in the case of FR1 and 12 or more in the case of FR2. For example, when the base station transmits the value of k_SSB as 30 in FR1, the controller 1010 may confirm that the k_SSB value is invalid and determine that the base station base station requires an SIB1 request.

The controller 1010 may transmit a request signal for a system information block based on configuration information comprising uplink resource information for transmitting the request signal for the system information block. The controller 1010 may configure the request signal for the system information block based on the configuration information comprising the uplink resource information for transmitting the request signal for the system information block.

According to an example, the configuration information may include at least one item of uplink resource information, such as uplink transmission band information in which an SIB request may be transmitted, frequency location information within the uplink transmission spatial band in which the SIB request may be transmitted, time location information within the uplink transmission spatial band in which the SIB request may be transmitted, or subcarrier spacing information of the uplink transmission spatial band in which the SIB request may be transmitted.

In addition, the configuration information may further include at least one of information such as a PRACH format, a sequence, a PUCCH, or an MCS, as signal format information to be used for the SIB request, a requestable SIB type, PDSCH resource allocation information on which an SIB is to be transmitted in response to a request, new CORESET information through which scheduling information for the SIB is to be transmitted in response to a request or whether to reuse a current CORESET, resource allocation information through which ACK/NACK or other feedback is to be transmitted when the UE transmits the SIB request, or information such as an RNTI to be used when the UE transmits the request.

According to an example, a format of a request signal for a system information block may be configured based on a random access preamble. The controller 1010 may configure the format of the request signal for system information as a random access preamble (RA Preamble) or a part thereof. That is, at least some PRACH resources may be used for an SIB1 request. In this case, according to an example, at least one of information on which of a plurality of preset sequences is selected, a cyclic shift value, and a transmission resource space, or which of a plurality of preset RACH occasion spaces defined by a combination thereof is selected may be included.

The controller 1010 may configure a request signal for system information based on the received configuration information, and transmit the request signal using the uplink resource information included in the configuration information.

The controller 1010 may receive the system information block in response to the request signal for the system information block. The controller 1010 may receive a response signal in response to transmission of the request signal for the system information block from the base station. The controller 1010 may receive a preset ACK from the base station to support fast feedback on whether the base station will transmit SIB1. According to an example, the response signal may comprise predetermined downlink control information received in CORESET 0 (Control Resource Set 0). That is, transmission of the response signal corresponding to the request signal for the system information block may be performed in a form of transmitting DCI of a preset form in CORESET 0. Alternatively, according to another example, the response signal may be transmitted through a downlink data channel together with a downlink control channel.

According to an example, the configuration information may include time interval information indicating when a system information block configured in a slot unit is received. The controller 1010 may receive SIB1 from the base station based on the time interval information. That is, the controller 1010 may receive SIB1 at, after, or within a time defined in the configuration information received from the base station, and the time may be defined in a slot unit.

According to the embodiments, there may be provided a method and an apparatus for configuring a request operation for system information in wireless communication that efficiently transmits system information. In addition, since the base station does not transmit system information until there is a request, operational power consumption in an environment with few users may be reduced.

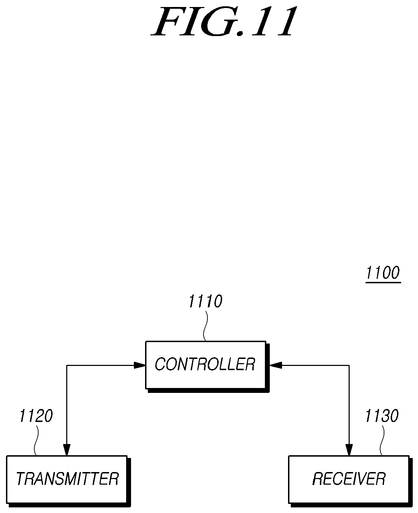

FIG. 11 is a block diagram illustrating a configuration of a base station 1100 according to an embodiment.

Referring to FIG. 11, a base station 1100 according to another embodiment comprises a transmitter 1120, a receiver 1130, and a controller 1110 configured to control operations of the transmitter and the receiver.

The controller 1110 may control overall operations of the base station 1100 according to the method of performing a request operation for system information in wireless communication described above.

The controller 1110 may inform the UE that the system information block is not transmitted after transmission of the synchronization signal block from the base station. When the base station is configured to transmit on-demand SIB1, that is, SIB1 in response to a request from the UE, the controller 1110 does not transmit SIB1 unless the UE makes a separate request.

In this case, the controller 1110 may inform the UE that the system information block is not transmitted by transmitting information indicating that the cell is configured to the system information block on demand (On-Demand SIB1). In this case, the information indicating that the cell is configured to transmit SIB1 on demand may include at least one of the following: information for preventing a legacy UE that does not support an On-Demand SIB1 function from accessing the base station, or information for informing a UE supporting the On-Demand SIB1 function whether the corresponding base station supports the On-Demand SIB1 function.

According to an example, the information indicating that the cell is configured to transmit the system information block on demand may indicate that a frequency offset for the synchronization signal block is greater than or equal to a first reference value in frequency range 1 (FR1) and greater than or equal to a second reference value in frequency range 2 (FR2). In this case, the first reference value may be greater than the second reference value. Specifically, a value of k_SSB, which is a parameter indicating the frequency offset, may be set to an invalid value, that is, a value of 24 or more in the case of FR1 and 12 or more in the case of FR2. For example, when the controller 1110 transmits the value of k_SSB as 30 in FR1, the UE may confirm that the k_SSB value is invalid and determine that the base station is a base station requiring an SIB1 request.

The controller 1110 may receive a request signal for the system information block based on configuration information comprising uplink resource information for receiving the request signal for the system information block. The controller 1110 may transmit configuration information comprising uplink resource information for transmitting the request signal for the system information block to the UE. The UE may configure the request signal for the system information block based on the received configuration information.

According to an example, the configuration information may include at least one item of uplink resource information, such as uplink transmission band information in which an SIB request may be transmitted, frequency location information within an uplink transmission space band in which a SIB request may be transmitted, time location information within an uplink transmission space band in which an SIB request may be transmitted, or subcarrier spacing information of an uplink transmission space band in which an SIB request may be transmitted.

In addition, the configuration information may further include at least one of information such as a PRACH format, a sequence, a PUCCH, or an MCS, as signal format information to be used for an SIB request, a requestable SIB type, PDSCH resource allocation information in which a SIB is to be transmitted in response to a request, new CORESET information through which scheduling information for the SIB is to be transmitted in response to a request or whether to reuse a current CORESET, resource allocation information in which an ACK/NACK or other feedback is to be transmitted when the UE transmits a SIB request, or information such as an RNTI to be used when the UE transmits a request.

According to an example, a format of the request signal for the system information block may be configured based on a random access preamble. The UE may configure the format of the request signal for the system information as a random access preamble (RA Preamble) or a part thereof. That is, at least some PRACH resources may be used for an SIB1 request. In this case, according to an example, at least one of information on which of a plurality of preset sequences is selected, a cyclic shift value, and a transmission resource space, or which of a plurality of preset RACH occasion spaces defined by a combination thereof is selected, may be included.

The controller 1110 may receive a request signal for system information from the UE using the uplink resource information included in configuration information.

The controller 1110 may transmit the system information block in response to the request signal for the system information block. The controller 1110 may transmit a response signal to the UE in response to transmission of the request signal for the system information block. The controller 1110 may transmit a preset ACK to the UE to provide fast feedback support on whether the corresponding base station will transmit SIB1. According to an example, the response signal may comprise predetermined downlink control information received in CORESET 0 (Control Resource Set 0). That is, transmission of the response signal corresponding to the request signal for the system information block may be performed in a form of transmitting a preset format of DCI in CORESET 0. Alternatively, according to another example, the response signal may be transmitted through a downlink data channel together with a downlink control channel.

According to an example, the configuration information may include time interval information indicating when the system information block configured in a slot unit is received. The controller 1110 may transmit SIB1 to the UE based on the time interval information. That is, the controller 1110 may transmit SIB1 at, after, or within a time defined in the configuration information, and the time may be defined in a slot unit.

According to the embodiments, there may be provided a method and apparatus for configuring a request operation for system information in wireless communication that efficiently transmits system information. In addition, the base station does not transmit system information until there is a request, thereby reducing operational power consumption in an environment with few users.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This patent application claims priority under 35 U.S.C. § 119(a) to Korean Patent Application No. 10-2024-0016158, filed in Korea on February 1, 2024 and Korean Patent Application No. 10-2025-0011328, filed in Korea on January 24, 2025, the entire contents of which are incorporated herein by reference. In addition, this patent application claims priority for countries other than the United States for the same reasons as above, and the entire contents thereof are incorporated herein by reference.

## Claims

1. A method of a user equipment (UE) for requesting system information in wireless communication, the method comprising:
confirming that a system information block is not transmitted after transmission of a synchronization signal block from a base station;
transmitting a request signal for the system information block based on configuration information comprising uplink resource information for transmitting the request signal for the system information block; and
receiving the system information block according to the request signal for the system information block.

2. The method of claim 1, wherein a format of the request signal for the system information block is configured based on a random access preamble.

3. The method of claim 1, further comprising receiving a response signal in response to transmitting the request signal for the system information block.

4. The method of claim 3, wherein the response signal comprises predetermined downlink control information received in CORESET 0 (Control Resource Set 0).

5. The method of claim 1, wherein the configuration information comprises time interval information, configured in units of slots, in which the system information block is received.

6. A method of a base station for providing system information upon request in wireless communication, the method comprising:
informing a user equipment (UE) that a system information block is not transmitted after transmission of a synchronization signal block from the base station;
receiving a request signal for the system information block based on configuration information comprising uplink resource information for receiving the request signal for the system information block; and
transmitting the system information block in response to the request signal for the system information block.

7. The method of claim 6, wherein a format of the request signal for the system information block is configured based on a random access preamble.

8. The method of claim 6, further comprising transmitting a response signal in response to the reception of the request signal for the system information block.

9. The method of claim 8, wherein the response signal comprises predetermined downlink control information transmitted in CORESET 0 (Control Resource Set 0).

10. The method of claim 6, wherein the configuration information comprises time interval information, configured in units of slots, in which the system information block is transmitted.

11. A user equipment (UE) configured to request system information i in wireless communication, the UE comprising:
a transmitter;
a receiver; and
a controller configured to control operations of the transmitter and the receiver,
wherein the controller is configured to:
confirm that a system information block is not transmitted after transmission of a synchronization signal block from a base station,
transmit a request signal for the system information block based on configuration information comprising uplink resource information for transmitting the request signal for the system information block, and
receive the system information block in response to the request signal for the system information block.

12. The UE of claim 11, wherein a format of the request signal for the system information block is configured based on a random access preamble.

13. The UE of claim 11, wherein the controller is configured to receive a response signal in response to transmitting the request signal for the system information block.

14. The UE of claim 13, wherein the response signal comprises predetermined downlink control information received in CORESET 0 (Control Resource Set 0).

15. The UE of claim 11, wherein the configuration information comprises time interval information, configured in units of slots, in which the system information block is received.
